# EUROPÄISCHE PATENTSCHRIFT

(11) **EP 1 545 927 B1**
(45) Veröffentlichungstag und Bekanntmachung des Hinweises auf die Patenterteilung: **07.05.2008**
(21) Anmeldenummer: 03750368.7
(22) Anmeldetag: 16.09.2003
(51) Int. Cl.: B60N 2/20

(54) **SITZANORDNUNG FÜR EINEN KRAFTFAHRZEUGSITZ**
SEAT ARRANGEMENT FOR A MOTOR VEHICLE SEAT
AGENCEMENT DE SIEGE POUR UN SIEGE DE VEHICULE AUTOMOBILE

(30) Priorität: 27.09.2002 DE 20215321 U; 27.09.2002 DE 10246473
(43) Veröffentlichungstag der Anmeldung: 29.06.2005
(73) Patentinhaber: Brose Fahrzeugteile GmbH & Co. KG, Coburg, 96450 Coburg (DE)
(72) Erfinder: HOFMANN, Jochen, 96257 Marktgraitz (DE); ANGERMÜLLER, Jürgen, 96268 Mitwitz (DE); HAAGEN, Thomas, 96253 Obersiemau (DE); FISCHER, Matthias, 96317 Kronach (DE)
(74) Vertreter: Baumgärtel, Gunnar
(86) Internationale Anmeldenummer: PCT/DE2003/003142
(87) Internationale Veröffentlichungsnummer: WO 2004/030978

(56) Entgegenhaltungen:
- EP-A- 0 404 628
- DE-A- 10 109 822
- FR-A- 2 781 435
- US-A- 4 726 622
- US-A- 5 997 090
- US-A- 6 152 533

## Beschreibung

Die Erfindung betrifft eine Sitzanordnung für einen Kraftfahrzeugsitz nach dem Oberbegriff des Anspruchs 1.

Eine solche Sitzanordnung ist z.B. aus US-A-6 152 533 bekannt.

Eine solche Sitzanordnung umfasst ein Sitzuntergestell, das eine Sitzfläche für einen Kraftfahrzeuginsassen definiert und sich in einer Sitzlängsrichtung erstreckt, sowie eine an einer Gestellbaugruppe angeordnete Rückenlehne.

Der Erfindung liegt das Problem zugrunde, eine derartige Sitzanordnung hinsichtlich ihres Komforts zu verbessern.

Dieses Problem wird erfindungsgemäß durch die Schaffung einer Sitzanordnung mit den Merkmalen des Anspruchs 1 gelöst.

Danach ist die Rückenlehne bezüglich des Sitzuntergestells mittels einer Hebelanordnung in Sitzlängsrichtung verstellbar.

Hierdurch kann mit einfachen Mitteln zum einen die Sitzkissentiefe an die individuellen Bedürfnisse eines Kraftfahrzeuginsassen angepasst werden sowie andererseits zusätzlicher Stauraum hinter dem entsprechenden Fahrzeugsitz durch Verschieben der Rückenlehne nach vorne geschaffen werden.

Unter der Sitzlängsrichtung, entlang der sich das Sitzuntergestell erstreckt, wird dabei diejenige Richtung verstanden, entlang der sich die Oberschenkel einer auf dem entsprechenden Fahrzeugsitz befindlichen Person erstrecken. Bezogen auf den in ein Kraftfahrzeug eingebauten Zustand des Sitzes entspricht dies der Fahrzeuglängsrichtung (Fahrtrichtung).

Dabei ist die Rückenlehne mittels der Hebelanordnung in mindestens zwei, insbesondere genau zwei, unterschiedliche Längspositionen bringbar und in diesen Längspositionen jeweils durch der Hebelanordnung zugeordnete Arretierungsmittel fixierbar.

Die Längsverschiebbarkeit der Rückenlehne kann ergänzend durch eine Längsführung, z.B. in Form einer Führungskulisse, erreicht werden, in der die Hebelanordnung, insbesondere ein Gelenkhebelpaar in Form einer Parallelogrammanordnung, geführt ist.

Die. Mittel zur Verschiebung der Rückenlehne in Sitzlängsrichtung können an einer Gestellbaugruppe angreifen, an der die Rückenlehne schwenkbar, insbesondere vorklappbar und/oder neigungsverstellbar, angelenkt ist. Hierdurch kann die Längsverschiebbarkeit der Rückenlehne mit der Möglichkeit der Einstellung der Neigung bzw. der Möglichkeit des Vorklappens der Rückenlehne kombiniert werden.

Nach einem anderen Aspekt der Erfindung ist bei einer Sitzanordnung mit einem Sitzuntergestell, das eine Sitzfläche für einen Kraftfahrzeuginsassen definiert, eine schwenkbar an einer Gestellbaugruppe des Sitzes angelenkte, Rückenlehne vorgesehen, die um eine Schwenkachse auf die Sitzfläche klappbar ist.

Eine derartige Sitzanordnung kann sowohl zur Bildung eines Vordersitzes als auch zur Bildung eines Rücksitzes eines Kraftfahrzeuges dienen. Sie ermöglicht das Vorklappen der Rückenlehne des entsprechenden Kraftfahrzeugsitzes auf die Sitzfläche, um zusätzlichen Stauraum zu schaffen. Die entsprechende Sitzfläche wird in der Regel durch ein Sitzpolster gebildet, das auf dem Sitzuntergestell angeordnet ist. Somit definiert das Sitzuntergestell die Sitzfläche insoweit, als es die Lage des Sitzpolsters bestimmt. Gebildet wird die Sitzfläche jedoch nicht durch das Sitzuntergestell selbst sondern vielmehr durch das Sitzpolster.

Bei einer Sitzanordnung der eingangs genannten Art besteht das Problem, dass die Rückenlehne beim Vorklappen, insbesondere über eine an der Rückenlehne vorgesehene Kopfstütze, mit der Windschutzscheibe (im Fall eines Vordersitzes) oder mit der Rückenlehne eines anderen Sitzes (im Fall eines Rücksitzes) kollidieren kann. Daher ist es erforderlich, vor dem Vorklappen der Rückenlehne auf die Sitzfläche die Kopfstütze von der Rückenlehne abzunehmen und an einem separaten Ort abzulegen. Dies beeinträchtigt in erheblichem Maße den Bedienkomfort einer Sitzanordnung mit vorklappbarer Rückenlehne.

Zur Verbesserung des Bedienkomforts ist daher vorgesehen, dass die Schwenkachse der Rückenlehne beim Vorklappen der Rückenlehne auf die Sitzfläche entlang einer vorgegebenen Bahn bewegt (verschoben) wird, so dass sie ihre räumliche Lage ändert.

Diese Bahn kann derart gewählt werden, dass eine Kollision der Rückenlehne des entsprechenden Fahrzeugsitzes mit anderen Fahrzeugkomponenten vermieden wird, insbesondere indem die Bahn derart gewählt wird, dass die Oberkante der Rückenlehne (und damit auch eine an der Oberkante der Rückenlehne angeordnete Kopfstütze) beim Vorklappen der Rückenlehne entlang einer Kurve bewegt werden, die eine Kollision mit anderen Fahrzeugkomponenten ausschließt.

Die Schwenkachse der Rückenlehne kann hierbei durch eine körperliche Baugruppe gebildet werden, d.h., es handelt sich nicht um eine bloß virtuelle Schwenkachse, sondern vielmehr um eine Lagerachse, über die die Rückenlehne an einer Gestellbaugruppe des Kraftfahrzeugsitzes schwenkbar gelagert ist.

Diese Schwenkachse wird beim Vorklappen der Rückenlehne entlang der vorgegebenen Bahn mittels einer Führungseinrichtung, z.B. in Form einer Führungskulisse, derart zwangsgeführt, dass die gewünschte Bewegung der Oberkante der Rückenlehne erreicht wird.

Alternativ zu einer Führungseinrichtung, die sich entlang der vorgegebenen Bahn für die Bewegung der Schwenkachse erstreckt, kann zur Führung der Schwenkachse auch ein längserstrecktes Führungselement vorgesehen sein, über das die Schwenkachse mit der zugehörigen Gestellbaugruppe verbunden ist und das beim Vorklappen der Rückenlehne derart bewegt wird, dass sich die Schwenkachse auf der vorgegebenen Bahnkurve bewegt. Als derartiges Führungselement eignet sich insbesondere ein Führungshebel, der schwenkbar an der Gestellbaugruppe angelenkt ist.

Um eine definierte Bewegung der Schwenkachse beim Vorklappen der Rückenlehne zu sicherzustellen, kann die Rückenlehne zusätzlich in einem von ihrer Schwenkachse (Lagerachse) beabstandeten Abschnitt mit der Gestellbaugruppe verbunden sein, z.B. über ein Koppelelement in Form eines Koppelhebels, das sich von der Rückenlehne zu der Gestellbaugruppe erstreckt. Alternativ kann die zusätzliche Kopplung von Rückenlehne und Gestellbaugruppe über eine Führungseinrichtung in Form einer Führungskulisse erfolgen, in der ein von der Schwenkachse beabstandeter Abschnitt der Rückenlehne beim Vorklappen geführt wird.

Gemäß einer Variante der Erfindung wird die Schwenkachse beim Vorklappen der Rückenlehne auf einer geschlossenen Bahn bewegt, so dass sich die Schwenkachse nach dem vollständigen Vorklappen der Rückenlehne wieder an derselben Stelle befindet wie vor Beginn der Klappbewegung. Dies kann auch dadurch erreicht werden, dass die Schwenkachse beim Vorklappen der Rückenlehne von einem Ende zum anderen Ende einer offenen Bahnkurve und wieder zurück zum einen Ende dieser Bahnkurve bewegt wird. '

Gemäß einer Weiterbildung der Erfindung sind Mittel zur Verriegelung der Schwenkachse in der Position vorgesehen, die einer in Gebrauchsposition hochgeklappten Rückenlehne entspricht, und/oder in der Position, die die Rückenlehne nach dem Vorklappen auf die Sitzfläche einnimmt. Demnach kann die Schwenkachse in beiden Endpositionen der Rückenlehne, also sowohl in der vor dem Vorklappen der Rückenlehne auf die Sitzfläche bestehenden Gebrauchsposition als auch in der nach dem Vorklappen der Rückenlehne auf die Sitzfläche bestehenden Position verriegelt werden. Unter einer in Gebrauchsposition hochgeklappten Rückenlehne wird dabei eine Position der Rückenlehne verstanden, in der diese zum Abstützen des Rückens einer auf dem entsprechenden Fahrzeugsitz sitzenden Person geeignet und nicht zur Schaffung von Transportraum auf die Sitzfläche vorgeklappt ist.

Als Verriegelungsmittel eignet sich beispielsweise ein schwenkbar gelagerter Verriegelungshebel.

Gemäß einer weiteren Ausführungsform der Erfindung ist zusätzlich eine Verstelleinrichtung vorgesehen, mittels der die Neigung der hochgeklappten Rückenlehne zwischen verschiedenen Gebrauchspositionen einstellbar ist. Diese Verstelleinrichtung dient also nicht zum Vorklappen der Rückenlehne auf die Sitzfläche, sondern vielmehr dazu, den Neigungswinkel der hochgeklappten Rückenlehne etwas verändern zu können, um ihn an die individuellen Bedürfnisse eines Fahrzeuginsassen anpassen zu können. Dabei verbleibt die Rückenlehne jedoch stets in einer Position, in der sie zum Abstützen des Rückens einer auf dem entsprechenden Fahrzeugsitz befindlichen Person geeignet ist.

Diese Einstellung der Lehnenneigung kann je nach Auslegung der hierfür vorgesehenen Verstelleinrichtung durch manuelle Einwirkung unmittelbar auf die Rückenlehne selbst oder mittels eines mit der Rückenlehne gekoppelten, ggf. elektrischen, Antriebs erfolgen.

Zur Fixierung einer zuvor eingestellten Neigung der Rückenlehne kann eine Verriegelungseinrichtung vorgesehen sein, die einerseits durch eine selbsthemmende Auslegung der zur Einstellung der Lehnenneigung vorgesehenen Verstelleinrichtung oder einer hiermit zusammenwirkenden Bremse gebildet werden kann oder andererseits durch separate Verriegelungsmittel, insbesondere wenn die Einstellung der Lehnenneigung durch unmittelbare manuelle Einwirkung auf die Rückenlehe erfolgen soll. Derartige separate Verriegelungsmittel können ein primäres Verriegelungselement umfassen, das zur Fixierung der Rückenlehne auf diese einwirkt, sowie ein sekundäres Verriegelungselement, welches das primäre Verriegelungselement in einer Lage blockiert, in der es die Fixierung der Rückenlehne bewirkt. Das sekundäre Verriegelungselement kann ferner dazu dienen, das primäre Verriegelungselement außer Eingriff mit der Rückenlehne zu bringen, wenn die Einstellung der Lehnenneigung geändert werden soll.

Weitere Merkmale und Vorteile der Erfindung werden bei der nachfolgenden Beschreibung eines Ausführungsbeispiels anhand der Figuren deutlich werden.

Es zeigen:
- Fig. 1 -: eine schematische Darstellung eines Kraftfahrzeugsitzes mit einer neigungsverstellbaren Rückenlehne, die außerdem auf die Sitzfläche des Kraftfahrzeugsitzes vorklappbar ist;
- Fig. 2a, 2b -: Einzelheiten einer Einrichtung zur Neigungsverstellung der Rückenlehne aus Figur 1;
- Fig. 3a, 3b -: Einzelheiten einer Einrichtung zum Vorklappen der Rückenlehne aus Figur 1 auf die Sitzfläche;
- Fig. 4: - eine Abwandlung der in den Figuren 2a und 2b dargestellten Einrichtung zur Neigungsverstellung der Rückenlehne;
- Fig. 5 -: eine Abwandlung der in den Figuren 3a und 3b dargestellten Einrichtung zum Vorklappen der Rückenlehne;
- Fig. 6 -: eine Anordnung mit einer Einrichtung zum Vorklappen einer nicht neigungsverstellbaren Rückenlehne;
- Fig. 7 -: eine weitere Abwandlung der in den Figuren 3a und 3b dargestellten Einrichtung zum Vorklappen der Rückenlehne;
- Fig. 8a, 8b -: eine Einrichtung zum Verschieben einer Rückenlehne eines Kraftfahrzeugsitzes in Sitzlängsrichtung;
- Fig. 9a, 9b -: eine Kombination einer Einrichtung zur Neigungsverstellung einer Rückenlehne eines Kraftfahrzeugsitzes mit einer Einrichtung zum Vorklappen der Rückenlehne auf die Sitzfläche sowie einer Einrichtung zum Verschieben der Rückenlehne in Sitzlängsrichtung;
- Fig. 10 -: eine weitere Ausführungsform einer Einrichtung zum Vorklappen der Rückenlehne eines Kraftfahrzeugsitzes auf die Sitzfläche;
- Figuren 11a-11c -: die Einrichtung aus Figur 10 in einem Zustand, der der vorgeklappten Rückenlehne entspricht, und zwar für unterschiedliche Neigungswinkel der Rückenlehne in ihrer ursprünglichen Gebrauchsposition vor dem Vorklappen.

In sämtlichen Figuren sind die einzelnen Komponenten einer Sitzanordnung jeweils durchscheinend dargestellt:

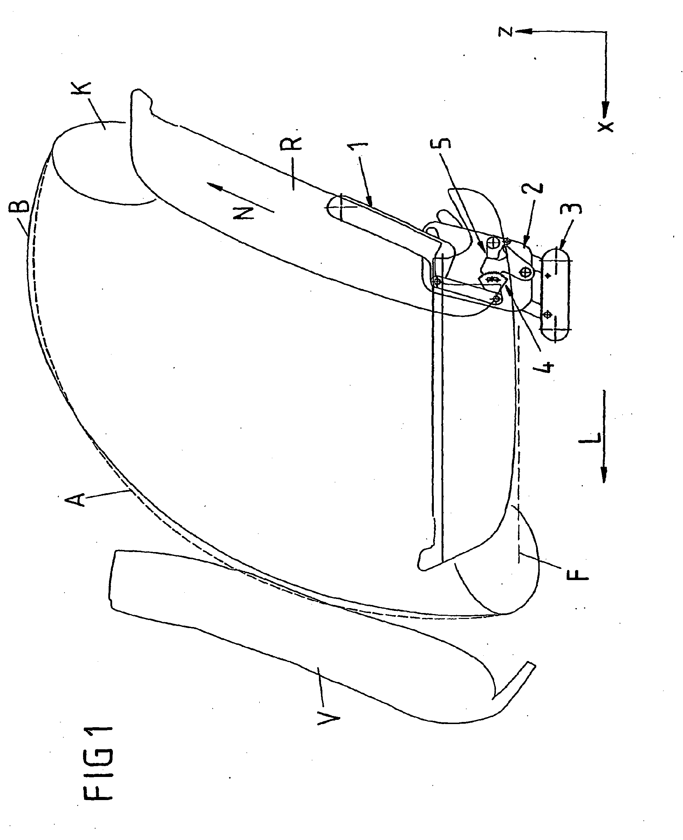

In Figur 1 ist eine Rückenlehne R eine Kraftfahrzeugsitzes mit Kopfstütze K einerseits in einer aufrechten Gebrauchsposition und andererseits in einer auf eine Sitzfläche F vorgeklappten, im wesentlichen horizontalen Position dargestellt. Die Sitzfläche F wird durch ein auf einem Sitzuntergestell Sitzpolster gebildet.

Die Rückenlehne R ist einerseits in ihrer Neigung N zwischen verschiedenen Gebrauchspositionen verstellbar. Diese Gebrauchspositionen zeichnen sich jeweils dadurch aus, dass die Rückenlehne in der jeweiligen Gebrauchsposition zum Abstützen des Rückens einer auf dem entsprechenden Kraftfahrzeugsitz befindlichen Person geeignet ist. Bezogen auf den in ein Kraftfahrzeug eingebauten Zustand eines Kraftfahrzeugsitzes erstreckt sich der Gebrauchsbereich üblicherweise von der senkrechten Ausrichtung der Rückenlehne R (entlang der vertikalen Fahrzeugachse z) bis hin zu einer stark nach hinten geneigten Rückenlehne R.

Darüber hinaus kann die Rückenlehne R in Richtung auf die durch das auf dem Sitzuntergestell angeordnete Sitzpolster gebildete Sitzfläche F vorgeklappt werden, um in dem Fahrzeug zusätzlichen Transportraum zu Verfügung zu stellen. Dies ist insbesondere von Bedeutung bei einem Rücksitz, wie er in Figur 1 dargestellt ist.

Beim Vorklappen der Rückenlehne R eines Rücksitzes besteht das Problem, dass die Oberseite der Rückenlehne bzw. die hierauf angeordnete Kopfstütze K mit der Rückenlehne eines Vordersitzes V kollidieren können. Dies wird deutlich anhand der in Figur 1 gestrichelt dargestellten Kurve A, die die Bewegung der Oberseite der Kopfstütze K beim Verschwenken der Rückenlehne R um eine definierte Achse im unteren Bereich der Rückenlehne illustriert. Es ist erkennbar, dass diese Kurve A die Rückenlehne des Vordersitzes V schneidet. Dies bedeutet, dass die Rückenlehne R des hinteren Sitzes sich nur dann auf die Sitzfläche F vorklappen lässt, wenn zuvor die Kopfstütze K entfernt worden ist. Dies mindert den Bedienkomfort der Einrichtung zum Vorklappen der Rückenlehne R.

Zur Vermeidung dieses Nachteiles ist nun die Einrichtung zum Vorklappen der Rückenlehne R auf die Sitzfläche F derart ausgestalten, dass sich die Schwenkachse, um die die Rückenlehne R beim Vorklappen auf die Sitzfläche F verschwenkt wird, während des Vorklappens der Rückenlehne derart bewegt, dass eine Kollision der Oberkante der Kopfstütze K mit dem Vordersitz V vermieden wird.

Eine entsprechende Bahnkurve B der Oberkante der Kopfstütze K ist in Figur 1 mit einer durchgezogenen Linie dargestellt. Es ist erkennbar, dass die Schwenkachse sich während des Vorklappens der Rückenlehne zunächst einerseits nach oben (entlang der vertikalen Fahrzeugachse z) und andererseits nach hinten (entgegen der Fahrzeuglängsachse x) bewegt. Hierdurch ist die korrigierte Bahnkurve B gegenüber der ursprünglichen Bahnkurve A (die sich beim Umklappen der Rückenlehne um eine nicht bewegte Schwenkachse ergibt) etwas nach oben (entlang der vertikalen Fahrzeugachse z) sowie etwas nach hinten (entgegen der Fahrzeuglängsrichtung x) verschoben. Dies verhindert eine Kollision der Oberkante der Kopfstütze K mit der Rückenlehne des Vordersitzes V.

Darüber hinaus ist die Rückenlehne R des in Figur 1 dargestellten Fahrzeugsitzes in Sitzlängsrichtung L gegenüber dem Sitzuntergestell U und der Sitzfläche F verschiebbar. Die SiWängsrichtung L ist dabei definiert als diejenige Richtung, entlang der sich das Sitzuntergestell sowie das hierauf angeordnete, die Sitzfläche F bildende Sitzpolster erstrecken. Bei einem in ein Kraftfahrzeug eingebauten Fahrzeugsitz entspricht die Sitzlängsrichtung L der Fahrzeuglängsachse x. D.h., die Sitzlängsrichtung L entspricht derjenigen Richtung entlang der ein Fahrzeugsitz üblicherweise mittels einer Sitzlängsverstellung verschiebbar ist.

Die Verschiebung der Rückenlehne R in Sitzlängsrichtung L (bzw. Fahrzeugslängsrichtung x) bezüglich des Sitzuntergestells und der Sitzfläche F kann unterschiedlichen Zwecken dienen: Zum einen kann hierdurch die Sitzkissentiefe verstellt werden, um diese an die individuellen Bedürfnisse eines Fahrzeuginsassen anzupassen. Zum anderen kann durch Verschieben der Rückenlehne R in Sitzlängsrichtung L nach vorne hinter der Rückenlehne R zusätzlicher Stauraum gewonnen werden. Umgekehrt kann durch Verschieben der Rückenlehne R nach hinten zusätzlich dazu beigetragen werden, dass die Rückenlehne R beim Vorklappen nicht mit dem Vordersitz V kollidiert.

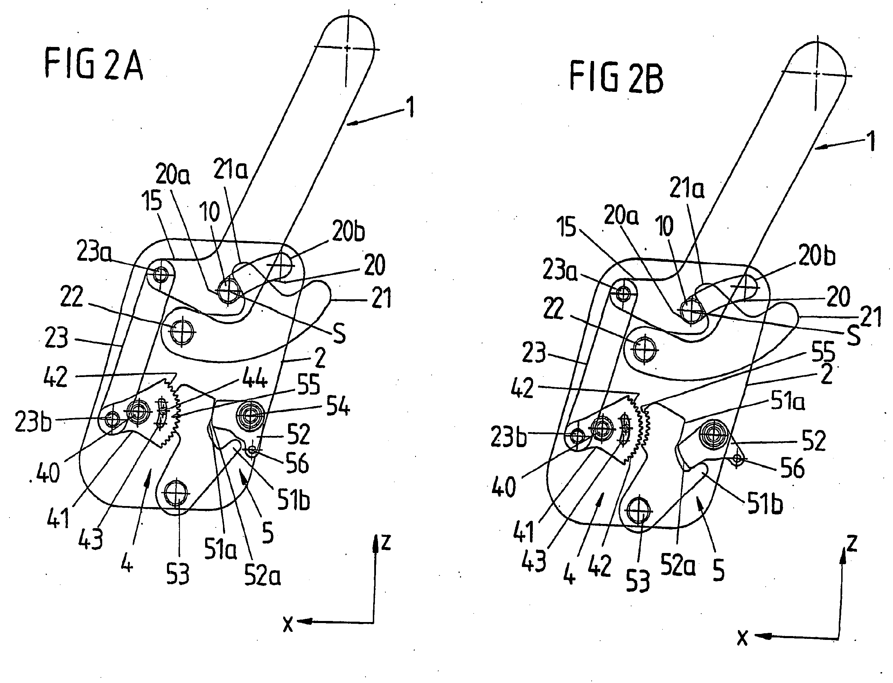

Die Baugruppen 1, 2, 3, 4, 5 des in Figur 1 dargestellten Kraftfahrzeugsitzes, die die Verstellung der Neigung der Rückenlehne, das Vorklappen der Rückenlehne auf die Sitzfläche, sowie das Verschieben der Rückenlehne in Sitzlängsrichtung ermöglichen, werden nachfolgend anhand der Figuren 2a bis 9b näher erläutert werden.

Figur 2a zeigt einen Lehnenbeschlag 1, an dem die in Figur 1 dargestellte Rückenlehne R eines Kraftfahrzeugsitzes befestigbar ist und der im Bereich seines entlang der vertikalen Fahrzeugachse z unteren Endes einen Lagerzapfen 10 aufweist, über den er schwenkbar an einer Gestellbaugruppe 2 in Form einer Tragplatte des Sitzgestells gelagert ist. Der Lagerzapfen 10 des Lehnenbeschlages 1 ist in einer Führungskulisse 20 der Tragplatte 2 schwenkbar gelagert, so dass der Lagerzapfen 10 und damit die Schwenkachse S des Lehnenbeschlages 1 durch Verschiebung entlang der Führungskulisse 20 zwischen einem ersten Ende 20a und einem zweiten Ende 20b der Führungskulisse bewegt werden können.

In dem in Figur 2a dargestellten Zustand wird eine solche Bewegung des Lagerzapfens 10 entlang der Führungskulisse 20 durch eine Verriegelungsnase 21a eines um eine Lagerstelle 22 der Tragplatte 2 schwenkbar gelagerten Verriegelungshebels 21 verhindert, der den Lagerzapfen 10 übergreift und dadurch dessen Bewegung entlang der Führungskulisse 20 sperrt.

Der Lehnenbeschlag 1 weist ferner einen Fortsatz 15 auf, über den der Lehnenbeschlag 1 von dem Lagerzapfen 10 beabstandet mittels eines Koppelhebels 23 mit einer Verstellschwinge 41 einer Einrichtung 4 zur Neigungsverstellung des Lehnenbeschlages 1 gekoppelt ist. Der Koppelhebel 23 ist hierzu an seinem einen, oberen Ende 23a mit dem Fortsatz 15 des Lehnenbeschlages 1 und mit seinem anderen, unteren Ende 23b mit der Verstellschwinge 41 gelenkverbunden. Die Verstellschwinge 41 ist um eine an der Tragplatte 2 vorgesehene Lagerstelle 40 verschwenkbar und weist eine Außenverzahnung 42 auf, die mit einer Verriegelungseinrichtung 5 derart in Eingriff steht, dass eine Schwenkbewegung der Verstellschwinge 41 in dem in Figur 2 dargestellten Zustand nicht möglich ist.

Die Verstellschwinge 41 weist darüber hinaus eine Kulisse 43 auf, in die ein an der Tragplatte 2 vorgesehener Zapfen 44 eingreift und die somit der Begrenzung des möglichen Schwenkbereiches der Verstellschwinge 41 dient.

Die der Verstellschwinge 41 zugeordnete Verstelleinrichtung 5 umfasst ein primäres Verriegelungselement 51, das als Verriegelungshebel um eine an der Tragplatte 2 vorgesehene Lagerstelle 53 verschwenkbar ist und das einen Verzahnungsbereich 55 aufweist, der in den Verzahnungsbereich 42 der Verstellschwinge 41 eingreift, um diese zu arretieren. Dem primären Verriegelungselement 51 zugeordnet ist ein ebenfalls als Verriegelungshebel ausgebildetes, um eine weitere Lagerstelle 54 verschwenkbares sekundäres Verriegelungselement 52, das mit einem Anschlag 52a an einem zugeordneten Anschlag 51 a des primären Verriegelungselementes 51 anliegt und dadurch eine Schwenkbewegung des primären Verriegelungselementes 51 verhindert, die die Verzahnung der Verstellschwinge 41 freigäbe.

An dem sekundären Verriegelungselement 52 ist eine Kraftangriffstelle 56 vorgesehen, an der eine Kraft eingeleitet werden kann, die zu einem Verschwenken des sekundären Verriegelungselementes 52 führt, so dass die einander zugeordneten Anschläge 51a, 52a der beiden Verriegelungselemente 51, 52 außer Eingriff geraten. Für das Auslösen der entsprechenden Schwenkbewegung des sekundären Verriegelungselementes 52 können beliebige physikalische bzw. technische Prinzipien verwendet werden, beispielsweise ein Aktor in Form eines Elektromagneten oder eines Elektromotors oder alternativ eine manuelle Betätigungseinrichtung usw..

Das primäre Verriegelungselement 51 ist vorzugsweise mittels eines in Figur 2a nicht dargestellten elastischen Elementes derart vorbelastet, dass es nach dem Verschwenken des primären Verriegelungselementes automatisch derart um seine Schwenkachse 53 gedreht wird, dass es die Verzahnung der Verstellschwinge 41 freigibt, vergl. Figur 2b. Alternativ kann beim Verschwenken des sekundären Verriegelungselementes 52 dieses auf einen Fortsatz 51 b des primären Verriegelungselementes 51 einwirken und dadurch eine Schwenkbewegung des primären Verriegelungselementes 51 bewirken, durch die dessen Verzahnung 55 mit der zugeordneten Verzahnung 42 der Verstellschwinge 41 außer Eingriff gerät.

In dem in Figur 2b dargestellten Zustand kann nun eine Veränderung der Neigung des Lehnenbeschlages 1 und damit der Rückenlehne R dadurch vorgenommen werden, dass manuell eine Kraft unmittelbar auf die Rückenlehne selbst ausgeübt wird. Hierdurch wird die Neigung des Lehnenbeschlages 1 aufgrund einer Schwenkbewegung um die durch den Lagerzapfen 10 definierte Schwenkachse S neu eingestellt. Die Schwenkachse S bewegt sich hierbei nicht, da der Lagerzapfen 10 mittels der Verriegelungsnase 21 a des Verriegelungshebels 21 an dem ersten Ende 20a der Führungskulisse 20 fixiert ist. Die Einstellung der Neigung der Rückenlehne R erfolgt also durch eine Schwenkbewegung um die örtlich fixierte Achse S.

Nach Abschluss der Verstellbewegung wird dann die aktuelle Neigungseinstellung des Lehnenbeschlages 1 mittels der Verriegelungseinrichtung 5 fixiert, indem das sekundäre Verriegelungselement 52 wieder in die Position verschwenkt wird, in der es derart auf das primäre Verriegelungselement 51 einwirkt, dass dieses die mit dem Lehnenbeschlag 1 über den Koppelhebel 23 gekoppelte Verstellschwinge 41 arretiert.

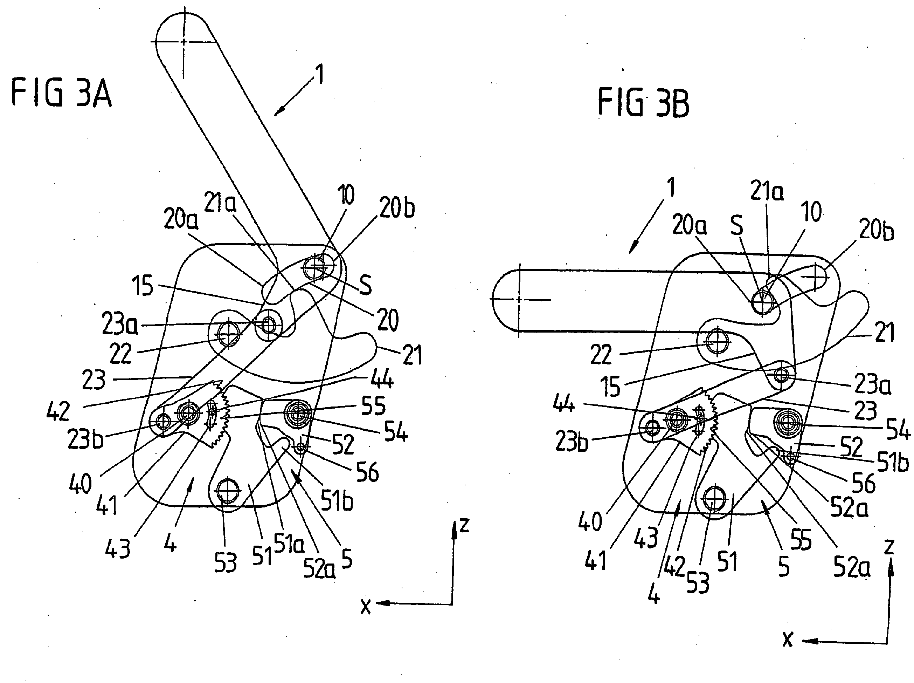

In den Figuren 3a und 3b ist dargestellt, wie mit der anhand der Figuren 2a und 2b erläuterten Anordnung das Vorklappen des Lehnenbeschlages 1 ermöglicht wird, so dass die Rückenlehne R auf die Sitzfläche F vorgeklappt wird, vgl. Figur 1.

Figur 3a zeigt die Anordnung dabei in einem Zustand, in dem der Lehnenbeschlag knapp die Hälfte seines Weges beim Vorklappen auf die Sitzfläche zurückgelegt hat, und Figur 3b zeigt den komplett vorgeklappten Lehnenbeschlag 1.

Das Vorklappen des Lehnenbeschlages 1 wird dadurch ermöglicht, dass zunächst die Verriegelungsnase 21 a durch Verschwenken des Verriegelungshebels 21 um seine Schwenkachse 22 außer Eingriff mit dem die Schwenkachse S des Lehnenbeschlages 1 bildenden Lagerzapfen 10 gebracht worden ist, vergl. Figur 3a. Die hierfür erforderliche Schwenkbewegung des Verriegelungshebels 21 kann manuell oder fremdkraftbetätigt (z.B. elektrisch) mittels eines geeigneten Aktors ausgelöst werden

Nach dem Entriegeln des Lagerzapfens 10 und somit der Schwenkachse S kann nun die Rückenlehne R (vergl. Figur 1) zusammen mit dem Lehnenbeschlag 1 in Richtung auf die Sitzfläche F des Fahrzeugsitzes vorgeklappt werden, indem die Rückenlehne R von einer Person ergriffen und zu der Sitzfläche F hin bewegt wird. Bei dieser Klappbewegung der Rückenlehne R und des Lehnenbeschlages 1 bewegt sich der Lagerzapfen 10, der die jeweils momentane Schwenkachse S des Lenkbeschlages 1 beim Vorklappen definiert, in der Führungskulisse 20 zwischen deren erstem Anschlag 20a und deren zweitem Anschlag 20b.

Die Bewegung des Lagerzapfens 10 in der Führungskulisse 20 wird durch den Koppelhebel 23 gesteuert, über den der Lehnenbeschlag 1 außerhalb seiner Schwenkachse S mit der Verstellschwinge 41 gekoppelt ist. Da die Verstellschwinge 41 beim Vorklappen der Rückenlehne bzw. des Lehnenbeschlages 1 mittels der zugeordneten Verriegelungseinrichtung 5 verriegelt ist, ist der Lehnenbeschlag 1 beim Vorklappen über den Koppelhebel 23 an ein gestellfestes (bezüglich der Tragplatte 2 nicht bewegliches Element) gekoppelt.

Unter der Einwirkung des Koppelhebels 23 auf den Lehnenbeschlag 1 bewegt sich der Lagerzapfen 10 des Lehnenbeschlages 1 beim Vorklappen des Lehnenbeschlages von dem ersten Ende 20a zu dem zweiten Ende 20b der Führungskulisse 20 und dann wieder zurück zu dem ersten Ende 20a. Bei komplett vorgeklapptem Lehnenbeschlag 1 befinden sich somit der Lagerzapfen 10 und die Schwenkachse S wieder an derselben Stelle, wie bei Beginn der Klappbewegung. Dies wird auch deutlich anhand Figur 1, wonach die beiden Kurven A (entsprechend dem Vorklappen der Rückenlehne R bei örtlich festgehaltener Schwenkachse) und B (entsprechend dem Vorklappen der Rückenlehne R bei räumlich variabler Schwenkachse) am Beginn der Klappbewegung (bei aufrecht gestellter Rückenlehne) und am Ende der Klappbewegung (bei komplett vorgeklappter Rückenlehne) jeweils zusammenfallen.

Der Übergang von der in Figur 1 gestrichelt dargestellten Bahnkurve A (Klappbewegung bei räumlich fixierter Schwenkachse) zu der durchgezogen dargestellten Bahnkurve B (bei räumlich veränderlicher Schwenkachse), wobei die zweitgenannte Bahnkurve B gegenüber der erstgenannten Bahnkurve A nach oben (entlang der vertikalen Fahrzeugachse z) und nach hinten (entgegen der Fahrzeuglängsachse x) versetzt ist, wird dadurch erreicht, dass sich die Führungskulisse in der Tragplatte 2 von ihrem ersten Ende 20a zu ihrem zweiten Ende 20b schräg nach oben und nach hinten erstreckt, also eine Komponente entlang der vertikalen Fahrzeugachse z und entgegen der Fahrzeuglängsachse x aufweist. Außerhalb der beiden Endpunkte der Klappbewegung befinden sich somit der Lagerzapfen 10 und die Schwenkachse S stets über und hinter der Position, die sie am Beginn der Klappbewegung eingenommen haben. Jene Position ist wiederum dadurch definiert, dass der Lagerzapfen 10 vor Beginn der Klappbewegung an dem ersten, vorderen/unteren Anschlag 20a der Führungskulisse 20 anliegt.

Insbesondere wird die Schwenkachse S beim Vorklappen der Rückenlehne R zumindest während des ersten Teiles der Klappbewegung entlang einer Richtung (mit einer Komponente nach hinten entgegen der Fahrzeuglängsachse x und einer Komponente nach oben entlang der vertikalen Fahrzeugachse z) bewegt, die der Richtung der Klappbewegung (mit einer Komponente nach vorne entlang der Fahrzeuglängsachse x und einer Komponente nach hinten entgegen der vertikalen Fahrzeugachse z) im wesentlichen entgegengesetzt ist.

Ausgehend von dem ersten Anschlag 20a der Führungskulisse 20 wird die weitere Bewegung des Lagerzapfens 10 in der Führungskulisse 20 zwischen den beiden Anschläge 20a, 20b durch den Koppelhebel 23 gesteuert. Die Führungskulisse 20 legt somit fest, entlang welcher Bahn der Lagerzapfen 10 und die Schwenkachse S beim Vorklappen des Lehnenbeschlages 1 bewegt werden können und der Koppelhebel 23 bestimmt die Bewegung entlang dieser Bahn.

Durch Veränderung der Geometrie der Führungskulisse 20. sowie durch Variation der Anordnung des Koppelhebels 23 lassen sich so beliebige andere Bahnen erzeugen, entlang derer die Schwenkachse S des Lehnenbeschlages 1 beim Vorklappen des Lehnenbeschlages 1 bewegt werden kann, um eine definierte, gewünschte Bewegung der Rückenlehne beim Vorklappen zu erreichen.

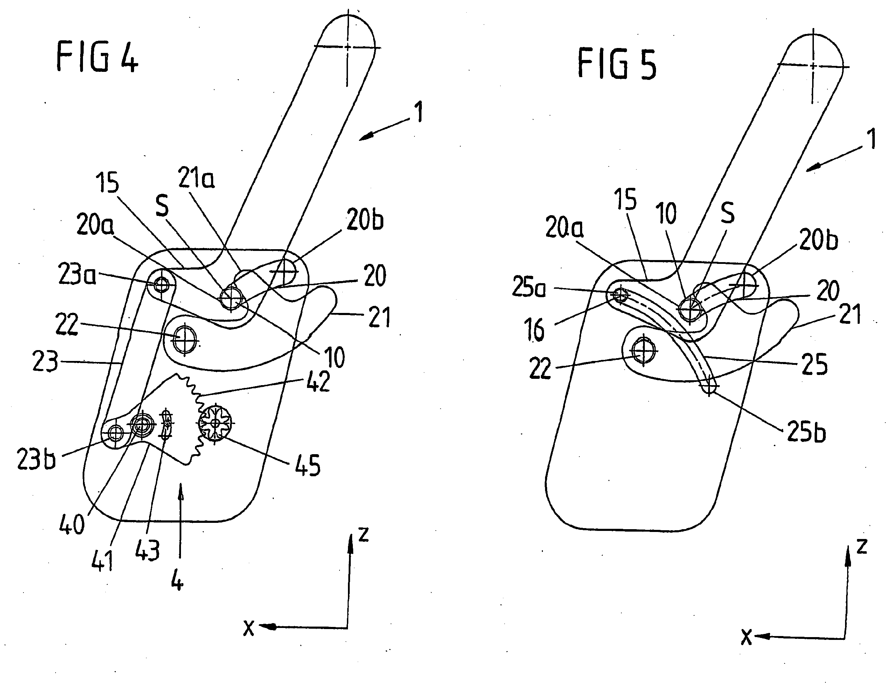

Figur 4 zeigt eine Abwandlung der Anordnung aus den Figuren 2a bis 3b dahingehend, dass die Verstellschwinge 41 über ihre Verzahnung 42 mit einem Antriebsritzel 45 zusammenwirkt, das zur Einstellung der Neigung des Lehnenbeschlages manuell oder fremdkraftbetätigt (insbesondere elektromotorisch) drehbar ist. Eine Drehbewegung des Antriebsritzels 4 wird umgesetzt in eine Schwenkbewegung der Verstellschwinge 41 um ihre Schwenkachse 40, die über den Koppelhebel 23 auf den Lehnenbeschlag 1 übertragen wird und somit zu einer Änderung der Neigungseinstellung des Lehnenbeschlages 1 führt.

Die Arretierung des Lehnenbeschlages 1 in einer bestimmten Neigungsposition kann dabei dadurch erreicht werden, dass die das Antriebsritzel 45 antreibende Antriebseinrichtung selbsthemmend ausgelegt ist oder mit einer separaten Bremseinrichtung gekoppelt ist. In jedem Fall muss verhindert werden, dass sich das Antriebsritzel 45 bei einem abtriebsseitig, also von Seiten der Verstellschwinge 41, aufgebrachten Drehmoment bewegt.

Figur 5 zeigt eine weitere Abwandlung der Anordnung aus den Figuren 2a bis 3b. Zum einen ist bei der Anordnung gemäß Figur 5 keine Einrichtung zur Verstellung der Neigung des Lehnenbeschlages 1 vorgesehen. Der Lehnenbeschlag 1 ist hier also ausschließlich auf die Sitzfläche vorklappbar, nicht aber in seiner Neigung zwischen unterschiedlichen Gebrauchspositionen verstellbar. Eine solche Anordnung eignet sich insbesondere zur Verwendung bei Rücksitzen von Kraftfahrzeugen.

Ferner ist der Koppelhebel 23 aus den Figuren 2a bis 3b, über den der Lehnenbeschlag 1 außerhalb seiner Schwenkachse S mit einem gestellfesten Element gekoppelt ist, vorliegend ersetzt durch eine Steuerkulisse 25, in der der Fortsatz 15 des Lehnenbeschlages 1 mittels eines am Fortsatz 15 vorgesehenen Führungselementes 16 zwischen einem ersten Ende 25a und einem zweiten Ende 25b geführt ist. Wie der Koppelhebel 23 aus den Figuren 2a bis 3b übernimmt die Steuerkulisse 25 aus Figur 5 die Funktion, die Bewegung des Lagerzapfens 10 und der Schwenkachse S in der Führungskulisse 20 zu steuern.

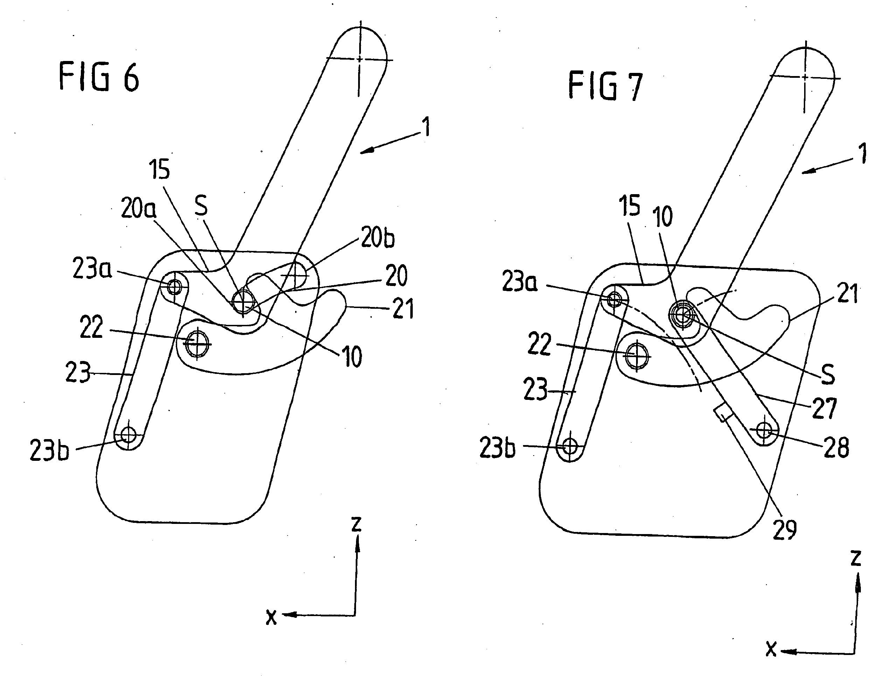

Figur 6 zeigt eine dritte Abwandlung der Anordnung aus den Figuren 2a bis 3b, wobei der einzige Unterschied darin besteht, dass auf eine Einrichtung zur Einstellung der Lehnenneigung zwischen verschiedenen Gebrauchspositionen verzichtet worden ist.

Stattdessen ist der Koppelhebel 23 an seinem unteren Ende 23b unmittelbar an der Tragplatte 2 schwenkbar angelenkt.

Bei der in Figur 7 dargestellten vierten Abwandlung der Anordnung aus den Figuren 2a bis 3b ist die Führungskulisse 20 durch einen Führungshebel 27 ersetzt, der schwenkbar an einer Lagerstelle 28 der Tragplatte 2 angeordnet ist, und der an seinem der Lagerstelle 28 abgewandten freien Ende mit dem Lagerzapfen 9 des Lehnenbeschlages 1 gelenkig verbunden ist bzw. diesen drehbar aufnimmt. In diesem Fall muss eine zusätzliche, in Figur 7 nicht dargestellte Einrichtung zur Verriegelung des Führungshebels 27 in der einen bzw. den beiden Endlagen vorgesehen sein, die der in einer Gebrauchsposition positionierten bzw. der auf die Sitzfläche vorgeklappten Rückenlehne entsprechen. An dem Führungshebel 27 ist dabei ein Anschlag 29 vorgesehen, der eine Endlage beim Verschwenken des Führungshebels 27 definiert und hierdurch die Funktion der Endanschläge einer Führungskulisse übernimmt.

Bei diesem Ausführungsbeispiel wird also eine Bewegung des Lagerzapfens 10 bzw. der Schwenkachse S des Lehnenbeschlages 1 beim Vorklappen dadurch bewirkt, dass der Führungshebel 27 um seine durch die Lagerstelle 28 gebildeten Achse verschwenkt. Die Steuerung dieser Bewegung erfolgt wie bei dem Ausführungsbeispiel gemäß Figur 6 durch den Koppelhebel 23, der unmittelbar an der Tragplatte 2 angelenkt ist.

Die Anordnung aus Figur 7 bildet somit ein Viergelenk als Einrichtung zum Vorklappen der Rückenlehne auf eine Sitzfläche.

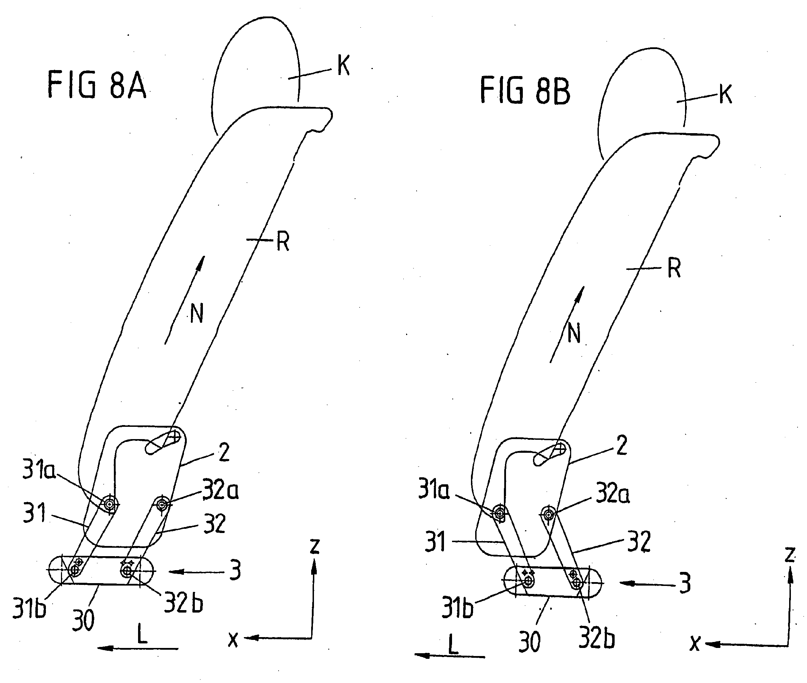

Die Figuren 8a und 8b zeigen einen weiteren Aspekt der Erfindung, wonach die Rückenlehne R eines Kraftfahrzeugsitzes in Sitzlängsrichtung L (vergl. Figur 1) bzw. Fahrzeuglängsrichtung x bezüglich des Sitzuntergestells und der zugehörigen Sitzfläche F bewegbar ist. Dies wird vorliegend dadurch erreicht, dass die Gestellbaugruppe (Tragplatte 2), an der die Rückenlehne R angeordnet ist, in Fahrzeuglängsrichtung x verschiebbar ist.

Die Verschiebbarkeit der Tragplatte 2 in Fahrzeuglängsrichtung x wird dadurch ermöglicht, dass die Tragplatte 2 im Bereich ihres in Fahrzeuglängsrichtung x vorderen Endes sowie im Bereich ihres in Fahrzeuglängsrichtung x hinteren Endes jeweils über einen Verstellhebel 31 bzw. 32 mit einer Bodenbaugruppe 30 gelenkverbunden ist. Die beiden Verstellhebel 31, 32 bilden eine Parallelogrammanordnung, wie sie auch zur Verstellung kompletter Sitzgestelle bekannt ist, und sind jeweils mit ihrem oberen Ende 31a bzw. 32a an der Tragplatte 2 und ihrem unteren Ende 31b bzw. 32b an der Bodenbaugruppe 30 angelenkt. Durch gemeinsames Verschwenken der Verstellhebel 31, 32, die hierbei stets parallel ausgerichtet sind, lässt sich die Rückenlehne R in Fahrzeuglängsrichtung nach vorne bewegen (Figur 8b) bzw. wieder nach hinten bewegen (Figur 8a).

Sofern bei der Verstellung der Rückenlehne R in Fahrzeuglängsrichtung x die Höhe der Rückenlehne R entlang der vertikalen Fahrzeugachse z konstant bleiben soll, müssen die Verstellhebel 31, 32 in ihrer zweiten Endlage (Figur 8b) eine entgegengesetzt gleiche Neigung zur vertikalen Fahrzeugachse z aufweisen wie in ihrer ersten Endlage (Figur 8a). In diesem Fall lassen sich mittels der durch die Verstellhebel 31, 32 gebildeten Verstelleinrichtung 3 lediglich zwei unterschiedliche Längspositionen der Rückenlehne R einstellen, wie in Figur 8a und 8b dargestellt

Wird demgegenüber bei der Verstellung der Rückenlehne R in Fahrzeuglängsrichtung x auch eine Änderung der Position der Rückenlehne entlang der vertikalen Fahrzeugachse z in Kauf genommen, so können auch mehr als zwei Positionen in Fahrzeuglängsrichtung x einstellbar sein. Es müssen dann entsprechende Verriegelungselemente, z.B. in Form von Rastelementen, vorgesehen sein, die eine Arretierung der Rückenlehne R in den einzelnen Längspositionen ermöglichen.

Bei dem in den Figuren 8a und 8b dargestellten Ausführungsbeispiel ist eine Verstellung der Rückenlehne R in Fahrzeuglängsrichtung x lediglich zwischen den beiden in Figur 8a bzw. Figur 8b dargestellten Endlagen vorgesehen. Diese Endlagen sind jeweils stabil, wenn entsprechende Begrenzungsmittel, . z.B. in Form von Anschlägen, oder andere Verriegelungsmittel vorgesehen sind, die ein weiteres Verschwenken der Verstellhebel 31, 32 über die jeweilige Endlage hinaus verhindern bzw. mit den die Verstellhebel 31, 32 in der jeweiligen Endlage verriegelbar sind.

Die Bodenbaugruppe 30 kann außerdem in einer Längsführung in Fahrzeuglängsrichtung x verschieblich geführt sein.

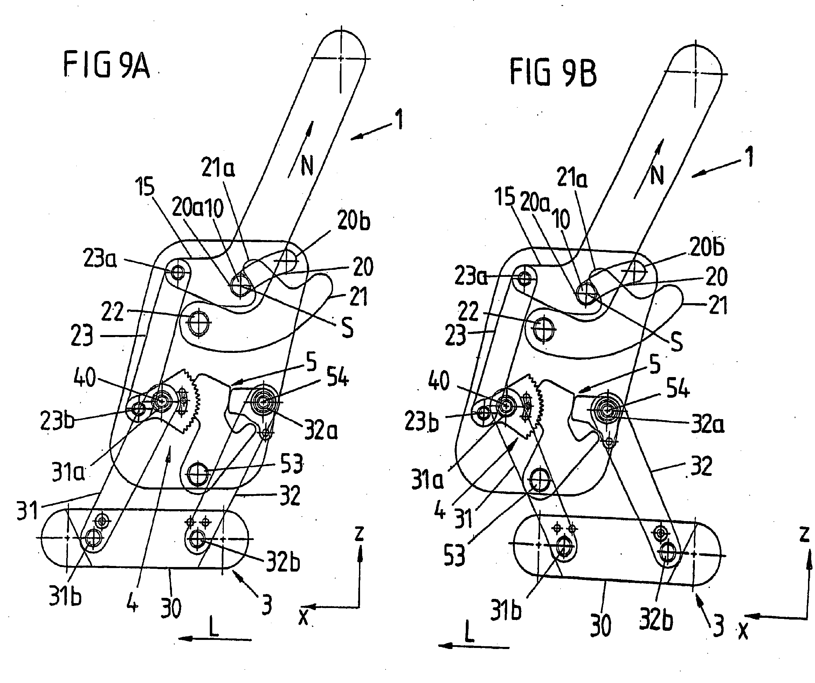

Die Figuren 9a und 9b zeigen eine Kombination der Verstelleinrichtung aus den Figuren 8a und 8b mit den Verstelleinrichtungen aus den Figuren 2a bis 3b. Hierdurch wird eine Verstellung des Lehnenbeschlages 1 in Sitzlängsrichtung x ermöglicht, sowie eine Einstellung der Neigung N des Lehnenbeschlages 1 und außerdem ein Vorklappen des Lehnenbeschlages 1 in Richtung auf die Sitzfläche des entsprechenden Fahrzeugsitzes.

In diesem Fall sind die beiden Verstellhebel 31, 32 mit ihren oberen Enden 31a, 32a an der Lagerstelle 40 der Verstellschwinge 41 bzw. der Lagerstelle 54 des sekundären Verriegelungselementes 52 angelenkt.

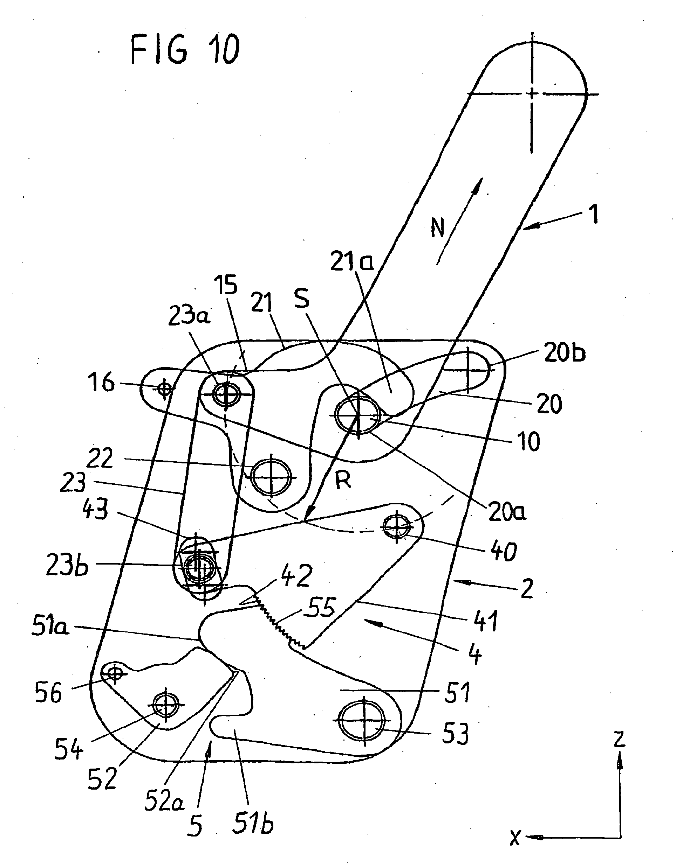

Die in Figur 10 dargestellte Anordnung, die eine Einrichtung 4 zur Verstellung des Neigungswinkels der Rückenlehne in einer aufrechten Gebrauchsposition mit einer zugeordneten Verriegelungseinrichtung 5 sowie eine Einrichtung zum Vorklappen der Rückenlehne auf eine Sitzfläche aufweist, entspricht im Wesentlichen der in den Figuren 2a bis 3b dargestellten Anordnung. Nachfolgend wird insoweit nur auf die wesentlichen technischen Unterschiede eingegangen. Hinsichtlich der übrigen Bestandteile der in Figur 10 dargestellten Anordnung wird auf die entsprechenden Ausführungen zu den Figuren 2a bis 3b verwiesen, wobei übereinstimmende Bauelemente bzw. Baugruppen in Figur 10 jeweils mit den gleichen Bezugszeichen versehen sind wie in den Figuren 2a bis 3c.

Zunächst sei bemerkt, dass bei der in Figur 10 dargestellten Anordnung zwei Bauelemente, nämlich der Lehnenbeschlag 1 und der Koppelhebel 23 auf einer anderen Seite der Tragplatte 2 angeordnet sind (nämlich auf deren zweiter Seite bzw. Rückseite) als die übrigen Baugruppen, nämlich der Verriegelungshebel 21, die Verstellschwinge 41 und die Verriegelungseinrichtung 5, die jeweils auf einer ersten Seite (Vorderseite) der Tragplatte 2 angeordnet sind. Die Anordnung der vorgenannten Baugruppen auf unterschiedlichen Seiten der Tragplatte 2 ist in Figur 10 nicht erkennbar, da vorliegend die einzelnen Bauelemente und Baugruppen in sämtlichen Figuren jeweils durchscheinend dargestellt sind. Die Anordnung einzelner Baugruppen auf unterschiedlichen Seiten der Tragplatte 2 ist erforderlich, um eine Kollision der Baugruppen bei einem Einstellvorgang zu verhindern.

Bei der in Figur 10 dargestellten Anordnung ist von Bedeutung, dass die durch die Anlenkstelle 23a des Koppelhebels 23 am Fortsatz 15 des Lehnenbeschlags 1 gebildete Achse sowie die durch die Lagerstelle 40 des Verstellhebels 41 gebildete Achse auf einer Kreisbahn liegen, deren Mittelpunkt durch die Schwenkachse S des Lehnenbeschlages 1 gebildet wird und die bezüglich dieses Mittelpunktes einen definierten Radius R aufweist.

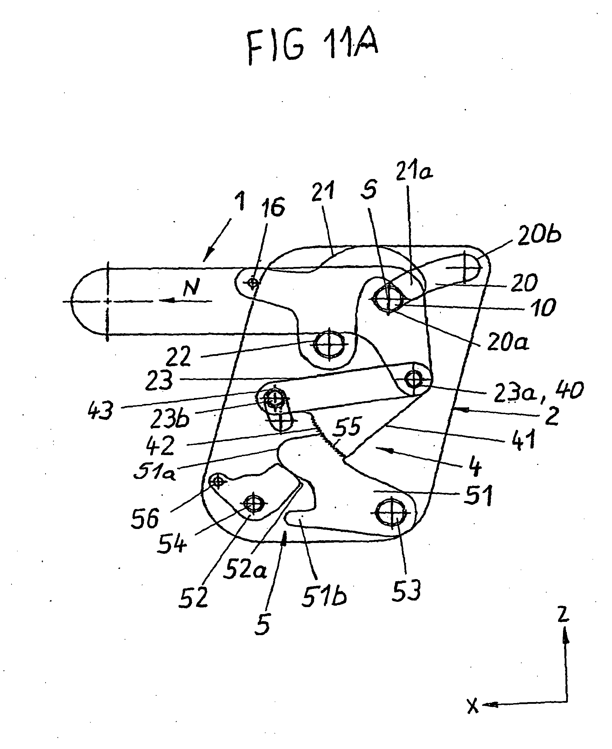

Wird nun der Lehnenbeschlag 1 der Rückenlehne, wie zuvor beispielhaft anhand der Figuren 3a und 3b beschrieben, durch Entriegeln des Lagerzapfens 10 und anschließendes Vorklappen der Rückenlehne, aus seiner in Figur 10 dargestellten aufrechten Position (entsprechend einer Gebrauchsposition der Rückenlehne) in eine im Wesentlichen waagerechte Position nach vorne geklappt (entsprechend einer auf die Sitzfläche vorgeklappten Position der Rückenlehne), so geraten hierdurch die durch die eine Anlenkstelle 23a des Koppelhebels 23 gebildete Achse sowie die durch die Lagerstelle 40 der Verstellschwinge 41 gebildete Achse zur Deckung, wie anhand der Figuren 11a bis 11c dargestellt, und fallen somit zuammen.

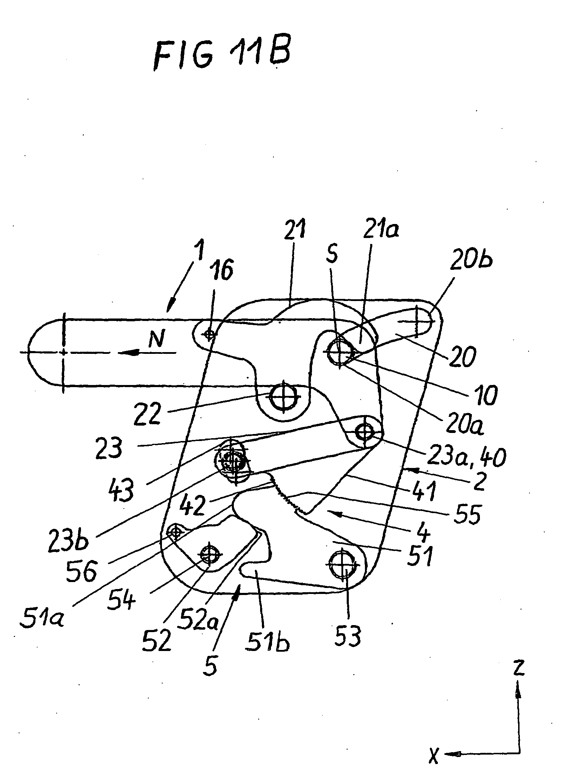

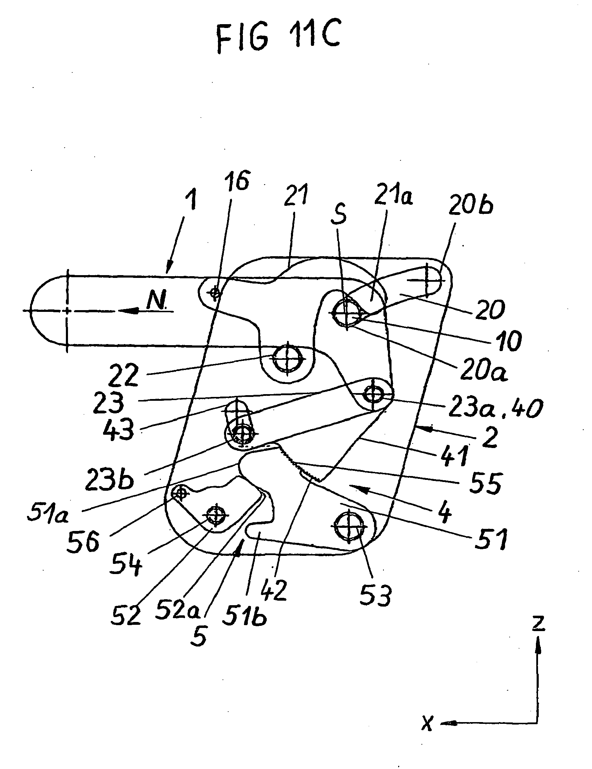

Die Figuren 11a bis 11c zeigen jeweils die Anordnung aus Figur 10 nach dem Vorklappen der Rückenlehne auf die Sitzfläche, entsprechend einer im Wesentlichen horizontalen (waagerechten) Ausrichtung des Lehnenbeschlages 1. Die Figuren 11a bis11c unterscheiden sich dabei in der Einstellung der Neigung des Lehnenbeschlages 1 (und damit der Rückenlehne) vor dem Vorklappen in die horizontale Position. Diese unterschiedlichen Einstellungen sind anhand der unterschiedlichen Winkellage der Verstellschwinge 41 in den Figuren 11a, 11 bund 11c erkennbar.

Die in Figur 11a gezeigte (und mittels der Verriegelungseinrichtung 5 fixierte) Einstellung der Verstellschwinge 41 entspricht einer sehr starken Neigung des Lehnenbeschlages 1 nach hinten in seiner Gebrauchsposition. Die in Figur 11b dargestellte Einstellung der Verstellschwinge 41 entspricht einer mittleren Neigung des Lehnenbeschlages 1 nach hinten in seiner Gebrauchsposition, und zwar genau derjenigen Neigung N des Lehnenbeschlages 1 in seiner Gebrauchsposition, wie sie in Figur 10 dargestellt ist. Denn in Figur 10 befindet sich die Verstellschwinge in derselben Winkellage wie in Figur 11b. Figur 11c schließlich zeigt einen vorgeklappten Lehnenbeschlag 1, der vor dem Vorklappen nahezu vertikal, d. h. parallel zur vertikalen Fahrzeugachse, ausgerichtet war.

Anhand der Figuren 11a bis 11c wird deutlich, dass die durch die eine Anlenkstelle 23a des Koppelhebels 23 definierte Achse sowie die durch die Lagerstelle 40 der Verstellschwinge 41 definierte Achse in allen drei Fällen zur Deckung gebracht sind, d.h., unabhängig davon, ob sich der Lehnenbeschlag 1 vor dem Vorklappen in einer sehr stark nach hinten geneigten Position befand (wie im Fall der Figur 11a) oder in einer Position mit mittlerer Neigung nach hinten (wie im Fall der Figur 11b) oder in einer nahezu vertikalen Ausrichtung mit allenfalls geringer Neigung (wie in Figur 11 c). In allen drei Fällen hat die eine, obere Anlenkstelle 23a des Koppelhebels beim Vorklappen der Rückenlehne am Ende eine Position eingenommen, in der sie (auf der anderen Seite der Tragplatte 2) unter der Lagerstelle 40 der Verstellschwinge 41 positioniert ist. Dies wird dadurch erreicht, dass die besagte Anlenkstelle 23a und die Lagerstelle 40 auf einer Kreisbahn mit einem definierten Radius R um die Schwenkachse S des Lehnenbeschlages 1 liegen und dass diese Schwenkachse S am Beginn und am Ende der Klappbewegung der Rückenlehne von einer Gebrauchsposition in ihre vorgeklappte Position jeweils an demselben Ende 20a der Führungsbahn 20, also an genau der gleichen Stelle an der Tragplatte 2, positioniert ist.

Mit der in Figur 10 dargestellten und anhand der Figuren 11a bis 11c näher erläuterten Anordnung wird somit erreicht, dass der Lehnenbeschlag 1 und damit die Rückenlehne R nach dem Vorklappen auf die Sitzfläche, unabhängig davon, welchen Neigungswinkel sie vor dem Vorklappen aufwiesen, jeweils im Wesentlichen horizontal in der gleichen Lage über der Sitzfläche des entsprechenden Fahrzeugsitzes positioniert sind. Es kann demnach also auch eine ursprünglich stark nach hinten geneigte Rückenlehne unmittelbar auf die Sitzfläche vorgeklappt werden, ohne dass die Rückenlehne zuvor in eine im Wesentlichen vertikale Gebrauchsposition überführt werden müsste.

## Patentansprüche

1. Sitzanordnung für einen Kraftfahrzeugsitz mit
- einem Sitzuntergestell, das eine Sitzfläche (F) für einen Fahrzeuginsassen definiert und sich in einer Sitzlängsrichtung (L) erstreckt, und
- einer Rückenlehne (R),
**dadurch gekennzeichnet,**
**dass** die Rückenlehne (R) bezüglich des Sitzuntergestells mittels einer Hebelanordnung (31, 32) in Sitzlängsrichtung (L) verstellbar ist.

2. Sitzanordnung nach Anspruch 1, **dadurch gekennzeichnet, dass** die Sitzlängsrichtung (L) sich, bezogen auf den, in ein Kraftfahrzeug eingebauten Zustand der Sitzanordnung, entlang der Fahrzeuglängsachse (x) erstreckt.

3. Sitzanordnung nach Anspruch 1 oder 2, **dadurch gekennzeichnet, dass** die Hebelanordnung (31, 32) durch zwei voneinander beabstandete Gelenkhebel (31, 32) gebildet wird, die einerseits jeweils an einem gemeinsam mit der Rückenlehne (R) verschiebbaren Element (2) und andererseits an einer Bodenbaugruppe (30) angelenkt sind.

4. Sitzanordnung nach einem der vorhergehenden Ansprüche, **dadurch gekennzeichnet, dass** die Hebelanordnung (31, 32) durch zwei parallel zueinander verlaufende Verstellhebel (31, 32) gebildet wird.

5. Sitzanordnung nach einem der vorhergehenden Ansprüche, **dadurch gekennzeichnet, dass** die Rückenlehne (R) zusätzlich mittels einer Längsführung in Sitzlängsrichtung (L) bewegbar ist.

6. Sitzanordnung nach einem der vorhergehenden Ansprüche, **dadurch gekennzeichnet, dass** die Rückenlehne (R) mittels der Hebelanordnung in mindestens zwei, insbesondere genau zwei, unterschiedliche Längspositionen bringbar ist und dass diese Längspositionen verriegelbar sind.

7. Sitzanordnung nach einem der vorhergehenden Ansprüche, **dadurch gekennzeichnet, dass** die Mittel zur Verschiebung der Rückenlehne (R) in Sitzlängsrichtung (L) an einer Gestellbaugruppe (2) angreifen, an der die Rückenlehne (R) gelagert ist.

8. Sitzanordnung nach einem der vorhergehenden Ansprüche, **dadurch gekennzeichnet, dass** die Rückenlehne (R) um eine Schwenkachse auf die Sitzfläche klappbar ist.

9. Sitzanordnung für einen Kraftfahrzeugsitz nach Anspruch 8, **dadurch gekennzeichnet, dass** die Schwenkachse (S) beim Vorklappen der Rückenlehne (R) auf die Sitzfläche (F) entlang einer vorgegebenen Bahn bewegt wird.

10. Sitzanordnung nach Anspruch 8 oder 9, **dadurch gekennzeichnet, dass** die Schwenkachse (S) durch eine körperliche Baugruppe (10, 20) der Sitzanordnung gebildet wird.

11. Sitzanordnung nach Anspruch 8 oder 9, **dadurch gekennzeichnet, dass** die Schwenkachse (S) durch eine Lagerachse (10) gebildet wird, über die die Rückenlehne (R) an einer Gestellbaugruppe (2) gelagert ist.

12. Sitzanordnung nach einem der Ansprüche 8 bis 11, **dadurch gekennzeichnet, dass** die Schwenkachse (S) beim Vorklappen der Rückenlehne (R) entlang der vorgegebenen Bahn zwangsgeführt ist.

13. Sitzanordnung nach Anspruch 12, **dadurch gekennzeichnet, dass** die Schwenkachse (S) mittels einer Führungseinrichtung (20) zwangsgeführt ist, die sich entlang der vorgegebenen Bahn erstreckt.

14. Sitzanordnung nach Anspruch 13, **dadurch gekennzeichnet, dass** die Führungseinrichtung (20) durch eine Führungskulisse gebildet wird.

15. Sitzanordnung nach Anspruch 12, **dadurch gekennzeichnet, dass** die Schwenkachse (S) mittels eines Führungselementes (27) zwangsgeführt ist, über das die Schwenkachse (S) mit einer Gestellbaugruppe (2) verbunden ist und das beim Vorklappen der Rückenlehne (R) bewegt wird.

16. Sitzanordnung nach Anspruch 15, **dadurch gekennzeichnet, dass** das Führungselement (27) längserstreckt ausgebildet ist.

17. Sitzanordnung nach Anspruch 15 oder 16, **dadurch gekennzeichnet, dass** das Führungselement (27) durch einen Führungshebel gebildet wird.

18. Sitzanordnung nach einem der Ansprüche 8 bis 17, **dadurch gekennzeichnet, dass** die Rückenlehne (R) zusätzlich außerhalb der Schwenkachse (S) mit einer Gestellbaugruppe (2) gelenkig in Verbindung steht.

19. Sitzanordnung nach Anspruch 18, **dadurch gekennzeichnet, dass** die Rückenlehne (R) außerhalb der Schwenkachse (S) mit der Gestellbaugruppe (2) über ein Koppelelement (23) verbunden ist, das sich von der Rückenlehne (R) zu der Gestellbaugruppe (2) erstreckt und beim Vorklappen der Rückenlehne (R) bewegt wird.

20. Sitzanordnung nach Anspruch 19, **dadurch gekennzeichnet, dass** das Koppelelement (23) durch einen Koppelhebel gebildet wird.

21. Sitzanordnung nach Anspruch 18, **dadurch gekennzeichnet, dass** die Rückenlehne (R) außerhalb der Schwenkachse (S) mit der Gestellbaugruppe (2 über eine Führungseinrichtung (25) verbunden ist, die einen Abschnitt (16) der Rückenlehne (R) beim Vorklappen führt.

22. Sitzanordnung nach Anspruch 21, **dadurch gekennzeichnet, dass** die Führungseinrichtung (25) durch eine Führungskulisse gebildet wird.

23. Sitzanordnung nach einem der Ansprüche 18 bis 22, **dadurch gekennzeichnet, dass** die Bewegung der Schwenkachse (S) entlang der vorgegebenen Bahn beim Vorklappen der Rückenlehne (R) durch das Zusammenwirken der Rückenlehne (R) mit der Gestellbaugruppe (2) außerhalb der Schwenkachse (S) gesteuert wird.

24. Sitzanordnung nach einem der Ansprüche 18 bis 23, **dadurch gekennzeichnet, dass** die Schwenkachse (S) entlang der vorgegebenen Bahn mittels einer entlang dieser Bahn erstreckten Führungseinrichtung (20) oder mittels eines Führungselementes (27) zwangsgeführt ist, über das die Schwenkachse (S) mit der Gestellbaugruppe (2) verbunden ist, und dass die Bewegung der Schwenkachse (S) entlang der vorgegebenen Bahn mittels eines Koppelelementes (23) oder mittels einer Führungseinrichtung (25) gesteuert wird, mittels dem bzw. mittels der die Rückenlehne (R) außerhalb der Schwenkachse (S) mit der Gestellbaugruppe (2) verbunden ist.

25. Sitzanordnung nach einem der Ansprüche 9 bis 24, **dadurch gekennzeichnet, dass** die Schwenkachse (S) beim Vorklappen der Rückenlehne (R) auf einer geschlossenen Bahn bewegt wird.

26. Sitzanordnung nach Anspruch 25, **dadurch gekennzeichnet, dass** die Schwenkachse (S) beim Vorklappen der Rückenlehne (R) von einem Ende (20a) zu einem anderen Ende (20b) einer offenen Bahnkurve und zurück zum einen Ende (20a) der Bahnkurve bewegt wird.

27. Sitzanordnung nach einem der Ansprüche 9 bis 26, **dadurch gekennzeichnet, dass** die Schwenkachse (S) beim Vorklappen der Rückenlehne (R) zumindest während eines Teiles der Klappbewegung entlang einer Richtung bewegt wird, die der Richtung der Klappbewegung im wesentlichen entgegengesetzt ist.

28. Sitzanordnung nach einem der Ansprüche 8 bis 27, **gekennzeichnet durch** Mittel (21, 21a) zur Verriegelung der Schwenkachse (S) in einer Position, die einer in Gebrauchsposition hochgeklappten Rückenlehne (R) entspricht, und/oder in einer Position, die einer auf die Sitzfläche (F) vorgeklappten Rückenlehne (R) entspricht.

29. Sitzanordnung nach Anspruch 28, **dadurch gekennzeichnet, dass** die Mittel (21, 21 a) zur Verriegelung der Schwenkachse (S) einen Verriegelungshebel (21) umfassen.

30. Sitzanordnung nach einem der Ansprüche 8 bis 29, **dadurch gekennzeichnet, dass** eine Verstelleinrichtung (4) vorgesehen ist, mittels der die Neigung der hochgeklappten Rückenlehne (R) zwischen verschiedenen Gebrauchspositionen einstellbar ist.

31. Sitzanordnung nach Anspruch 30, **gekennzeichnet durch** eine Verriegelungseinrichtung (5) zur Verriegelung einer zuvor eingestellten Neigung der Rückenlehne (R).

32. Sitzanordnung nach Anspruch 31, **dadurch gekennzeichnet, dass** die Verriegelungseinrichtung durch die selbsthemmende Auslegung der Verstelleinrichtung (4) oder durch eine der Verstelleinrichtung (4) zugeordnete Bremse gebildet wird.

33. Sitzanordnung nach Anspruch 31, **dadurch gekennzeichnet, dass** eine separate Verriegelungseinrichtung (5) vorgesehen ist, die mit der Verstelleinrichtung (4) zusammenwirkt.

34. Sitzanordnung nach Anspruch 33, **dadurch gekennzeichnet, dass** die Verriegelungseinrichtung (5) ein primäres Verriegelungselement (51) umfasst, das zur Verriegelung der Verstelleinrichtung (4) auf diese einwirkt, sowie ein sekundäres Verriegelungselement (52); mit dem das primäre Verriegelungselement (51) in einer Position verriegelbar ist, in der es auf die Verstelleinrichtung (4) einwirkt.

35. Sitzanordnung nach Anspruch 34, **dadurch gekennzeichnet, dass** das sekundäre Verriegelungselement (52) das primäre Verriegelungselement (51) mit der Verstelleinrichtung (4) außer Eingriff bringt, um die Neigung der Rückenlehne verändern zu können.

36. Sitzanordnung nach einem der Ansprüche 9 bis 35, **dadurch gekennzeichnet, dass** die Sitzfläche (F) durch ein auf dem Sitzuntergestell angeordnetes Sitzpolster gebildet wird.

## Claims

1. Seat arrangement for a motor vehicle seat having
- a seat base which defines a seat surface (F) for a vehicle occupant and extends in a longitudinal direction (L) of the seat, and
- a backrest (R)
**characterised in that**
the backrest (R) can be adjusted in the longitudinal direction (L) of the seat relative to the seat base by means of a lever arrangement (31, 32).

2. Seat arrangement according to claim 1, **characterised in that** the longitudinal direction (L) of the seat extends along the longitudinal axis (x) of the vehicle in relation to the position of the seat arrangement installed in a motor vehicle.

3. Seat arrangement according to claim 1 or 2, **characterised in that** the lever arrangement (31, 32) is formed by two spaced articulated levers (31, 32) which are attached on one side to an element (2) displaceable together with the backrest (R) and on the other side to a floor unit (30).

4. Seat arrangement according to one of the preceding claims, **characterised in that** the lever arrangement (31, 32) is formed by two displacement levers (31, 32) which run parallel to each other.

5. Seat arrangement according to one of the preceding claims, **characterised in that** the backrest (R) can be moved additionally in the longitudinal direction (L) of the seat by means of a longitudinal guide.

6. Seat arrangement according to one of the preceding claims, **characterised in that** the backrest (R) can be brought by means of the lever arrangement into at least two, more particularly just two, different longitudinal positions and that these longitudinal positions can be locked.

7. Seat arrangement according to one of the preceding claims **characterised in that** the means for moving the backrest (R) in the longitudinal direction (L) of the seat engage on a structural frame unit (2) on which the backrest (R) is mounted.

8. Seat arrangement according to one of the preceding claims, **characterised in that** the backrest (R) can be folded about a pivotal axis onto the seat surface.

9. Seat arrangement for a motor vehicle seat according to claim 8, **characterised in that** the pivotal axis (S) is moved along a predetermined path as the backrest (R) is folded forwards onto the seat surface (F).

10. Seat arrangement according to claim 8 or 9, **characterised in that** the pivotal axis (S) is formed by a physical structural unit (10, 20) of the seat arrangement.

11. Seat arrangement according to claim 8 or 9, **characterised in that** the pivotal axis (S) is formed by a bearing axis (10) through which the backrest (R) is mounted on a structural frame unit (2)

12. Seat arrangement according to one of claims 8 to 11, **characterised in that** the pivotal axis (S) is automatically guided along the predetermined path as the backrest (R) is folded forwards.

13. Seat arrangement according to claim 12, **characterised in that** the pivotal axis (S) is automatically guided by means of a guide device (20) which extends along the predetermined path.

14. Seat arrangement according to claim 13, **characterised in that** the guide device (20) is formed by a guide slide.

15. Seat arrangement according to claim 12, **characterised in that** the pivotal axis (S) is automatically guided by means of a guide element (27) through which the pivotal axis (S) is connected to a structural frame unit (2) and which is moved as the backrest (R) is folded forwards.

16. Seat arrangement according to claim 15, **characterised in that** the guide element (27) is designed longitudinally extended.

17. Seat arrangement according to claim 15 or 16, **characterised in that** the guide element (27) is formed through a guide lever.

18. Seat arrangement according to one of claims 8 to 17, **characterised in that** the backrest (R) is connected additionally outside of the pivotal axis (S) for articulation to a structural frame unit (2).

19. Seat arrangement according to claim 18, **characterised in that** the backrest (R) is connected outside of the pivotal axis (S) to the structural frame unit (2) through a coupling element (23) which extends from the backrest (R) to the structural frame unit (2) and is moved as the backrest rest (R) folds forward.

20. Seat arrangement according to claim 19, **characterised in that** the coupling element (23) is formed by a coupling lever.

21. Seat arrangement according to claim 18, **characterised in that** the backrest (R) is connected outside of the pivotal axis (S) to the frame unit (2) through a guide device (25) which guides a section (16) of the backrest (R) as it folds forward.

22. Seat arrangement according to claim 21, **characterised in that** the guide device (25) is formed through a guide slide.

23. Seat arrangement according to one of claims 18 to 22, **characterised in that** the movement of the pivotal axis (S) along the predetermined path as the backrest (R) folds forward is controlled through the interaction of the backrest (R) with the structural frame unit (2) outside of the pivotal axis (S).

24. Seat arrangement according to one of claims 18 to 23, **characterised in that** the pivotal axis (S) is automatically guided along the predetermined path by means of a guide device (20) extended along this path or by means of a guide element (27) through which the pivotal axis (S) is connected to the structural frame unit (2) and that the movement of the pivotal axis (S) along the predetermined path is controlled by means of a coupling element (23) or by means of a guide device (5) by means of which the backrest (R) is connected to the structural frame group (2) outside of the pivotal axis (S).

25. Seat arrangement according to one of claims 9 to 24, **characterised in that** the pivotal axis (S) is moved on a closed path as the backrest (R) is folded forwards.

26. Seat arrangement according to claim 25, **characterised in that** as the backrest (R) is folded forwards the pivotal axis (S) is moved from one end (20a) to another end (20b) of an open path curve and back to the one end (20a) of the path curve.

27. Seat arrangement according to one of claims 9 to 26, **characterised in that** as the backrest (R) folds forward the pivotal axis (S) is moved at least during part of the folding movement along a direction which is substantially opposite the direction of the folding movement.

28. Seat arrangement according to one of claims 8 to 27, **characterised by** means (21, 21 a) for locking the pivotal axis (S) in a position which corresponds to a backrest (R) raised up in the useful position, and/or in a position which corresponds to a backrest (R) folded forwards down onto the seat surface (F).

29. Seat arrangement according to claim 28, **characterised in that** the means (21, 21 a) for locking the pivotal axis (S) comprise a locking lever (21).

30. Seat arrangement according to one of claims 8 to 29, **characterised in that** an adjusting device (4) is provided by means of which the rake of the raised-up backrest (R) can be set between different useful positions.

31. Seat arrangement according to claim 30, **characterised by** a locking device (5) for locking a previously set incline of the backrest (R).

32. Seat arrangement according to claim 31, **characterised in that** the locking device is formed through the self-locking design of the adjustment device (4) or through a brake associated with the adjustment device (4).

33. Seat arrangement according to claim 31, **characterised in that** a separate locking device (5) is provided which interacts with the adjusting device (4).

34. Seat arrangement according to claim 33, **characterised in that** the locking device (5) comprises a primary locking element (51) which for locking the adjusting device (4) acts on same, as well as a second locking element (52) with which the primary locking element (51) can be locked in a position in which it acts on the adjusting device (4).

35. Seat arrangement according to claim 34, **characterised in that** the secondary locking element (52) brings the primary locking element (51) out of engagement with the adjusting device (4) in order to be able to change the rake of the backrest.

36. Seat arrangement according to one of claims 9 to 35, **characterised in that** the seat surface is formed by a seat cushion mounted on the seat base.

## Revendications

1. Agencement de siège pour un siège de véhicule automobile, comportant
- un châssis de siège qui définit une surface de siège (F) pour un occupant de véhicule et qui s'étend dans une direction longitudinale de siège (L), et
- un dossier (R),
**caractérisé en ce que**
le dossier (R) est réglable en direction longitudinale de siège (L) par rapport au châssis de siège au moyen d'un agencement à leviers (31, 32).

2. Agencement de siège selon la revendication 1, **caractérisé en ce que** la direction longitudinale de siège (L) s'étend le long de l'axe longitudinal de véhicule (x) par rapport à l'état de montage de l'agencement de siège dans un véhicule.

3. Agencement de siège selon la revendication 1 ou 2, **caractérisé en ce que** l'agencement à leviers (31, 32) est formé par deux leviers articulés (31, 32) espacés l'un de l'autre qui sont articulés d'une part chacun sur un élément (2) susceptible de se déplacer conjointement avec le dossier (R) et d'autre part sur un ensemble de plancher (30).

4. Agencement de siège selon l'une quelconque des revendications précédentes, **caractérisé en ce que** l'agencement à leviers (31, 32) est formé par deux leviers de réglage (31, 32) s'étendant parallèlement l'un par rapport à l'autre.

5. Agencement de siège selon l'une quelconque des revendications précédentes, **caractérisé en ce que** le dossier (R) est additionnellement déplaçable au moyen d'un guidage longitudinal en direction longitudinale du siège (L).

6. Agencement de siège selon l'une quelconque des revendications précédentes, **caractérisé en ce que** le dossier (R) peut être amené au moyen de l'agencement à leviers dans au moins deux, en particulier exactement deux, différentes positions en longueur et **en ce que** ces positions en longueur sont verrouillables.

7. Agencement de siège selon l'une quelconque des revendications précédentes, **caractérisé en ce que** les moyens de déplacement du dossier (R) en direction longitudinale de siège (L) attaquent un ensemble de châssis (2) sur lequel est monté le dossier (R).

8. Agencement de siège selon l'une quelconque des revendications précédentes, **caractérisé en ce que** le dossier (R) est rabattable sur la surface de siège autour d'un axe de pivotement.

9. Agencement de siège pour un siège de véhicule automobile selon la revendication 8, **caractérisé en ce que** lorsque le dossier (R) est rabattu en avant sur la surface de siège (F), l'axe de pivotement (S) est déplacé le long d'une trajectoire prédéterminée.

10. Agencement de siège selon la revendication 8 ou 9, **caractérisé en ce que** l'axe de pivotement est formé par un ensemble corporel (10, 20) de l'agencement de siège.

11. Agencement de siège selon la revendication 8 ou 9, **caractérisé en ce que** l'axe de pivotement (S) est formé par un axe de montage (10) via lequel le dossier (R) est monté sur un ensemble de châssis (2).

12. Agencement de siège selon l'une des revendications 8 à 11, **caractérisé en ce que** lorsque le dossier (R) est rabattu vers l'avant, l'axe de pivotement (S) est guidé par force le long de la trajectoire prédéterminée.

13. Agencement de siège selon la revendication 12, **caractérisé en ce que** l'axe de pivotement (S) est guidé par force au moyen d'un dispositif de guidage (20) qui s'étend le long de la trajectoire prédéterminée.

14. Agencement de siège selon la revendication 13, **caractérisé en ce que** le dispositif de guidage (20) est formé par une coulisse de guidage.

15. Agencement de siège selon la revendication 12, **caractérisé en ce que** l'axe de pivotement (S) est guidé par force au moyen d'un élément de guidage (27) via lequel l'axe de pivotement (S) est relié à un ensemble de châssis (2) et qui est déplacé lorsque le dossier (R) est rabattu vers l'avant.

16. Agencement de siège selon la revendication 15, **caractérisé en ce que** l'élément de guidage (27) est réalisé allongé.

17. Agencement de siège selon la revendication 15 ou 16, **caractérisé en ce que** l'élément de guidage (27) est formé par un levier de guidage.

18. Agencement de siège selon l'une des revendications 8 à 17, **caractérisé en ce que** le dossier (R) est additionnellement en liaison articulée avec un ensemble de châssis (2) en dehors de l'axe de pivotement (S).

19. Agencement de siège selon la revendication 18, **caractérisé en ce que** le dossier (R) est relié en dehors de l'axe de pivotement (S) avec l'ensemble de châssis (2) via un élément de couplage (32) qui s'étend depuis le dossier (R) jusqu'à l'ensemble de châssis (2) et qui est déplacé lorsque le dossier (R) est rabattu vers l'avant.

20. Agencement de siège selon la revendication 19, **caractérisé en ce que** l'élément de couplage (23) est formé par un levier de couplage.

21. Agencement de siège selon la revendication 18, **caractérisé en ce que** le dossier (R) est relié en dehors de l'axe de pivotement (S) à l'ensemble de châssis (2) via un dispositif de guidage (25) qui guide un tronçon (16) du dossier (R) lors du rabattement vers l'avant.

22. Agencement de siège selon la revendication 21, **caractérisé en ce que** le dispositif de guidage (25) est formé par une coulisse de guidage.

23. Agencement de siège selon l'une des revendications 18 à 22, **caractérisé en ce que** le mouvement de l'axe de pivotement (S) le long de la trajectoire prédéterminée, lorsque le dossier (R) est rabattu vers l'avant, est commandé par la coopération entre le dossier (R) et l'ensemble de châssis (2) en dehors de l'axe de pivotement (S).

24. Agencement de siège selon l'une des revendications 18 à 23, **caractérisé en ce que** l'axe de pivotement (S) est guidé par force le long de la trajectoire prédéterminée au moyen d'un dispositif de guidage (20) s'étendant le long de cette trajectoire ou au moyen d'un élément de guidage (27) via lequel l'axe de pivotement (S) est relié à l'ensemble de châssis (2), et **en ce que** le mouvement de l'axe de pivotement (S) le long de la trajectoire prédéterminée est commandé au moyen d'un élément de couplage (23) ou au moyen d'un dispositif de guidage (25) au moyen duquel le dossier (R) est relié à l'ensemble de châssis (2) en dehors de l'axe de pivotement (S).

25. Agencement de siège selon l'une des revendications 9 à 24, **caractérisé en ce que** lorsque le dossier (R) est rabattu vers l'avant, l'axe de pivotement (S) est déplacé sur une trajectoire fermée.

26. Agencement de siège selon la revendication 25, **caractérisé en ce que** lorsque le dossier (R) est rabattu vers l'avant, l'axe de pivotement (S) est déplacé depuis une extrémité (20a) vers une autre extrémité (20b) d'une trajectoire ouverte et revient vers une extrémité (20a) de la trajectoire.

27. Agencement de siège selon l'une des revendications 9 à 26, **caractérisé en ce que** lorsque le dossier (R) est rabattu vers l'avant, l'axe de pivotement (S) est déplacé au moins pendant une partie du mouvement de rabattement le long d'une direction qui est sensiblement opposée à la direction du mouvement de rabattement.

28. Agencement de siège selon l'une des revendications 8 à 27, **caractérisé par** des moyens (21, 21a) de verrouillage de l'axe de pivotement (S) dans une position qui correspond à un dossier rabattu vers le haut dans une position d'utilisation et/ou dans une position qui correspond à un dossier (R) rabattu vers l'avant sur la surface de siège (F).

29. Agencement de siège selon la revendication 28, **caractérisé en ce que** les moyens (21, 21a) de verrouillage de l'axe de pivotement (S) comprennent un levier de verrouillage (21).

30. Agencement de siège selon l'une des revendications 8 à 29, **caractérisé en ce qu'**il est prévu un dispositif de réglage (4) au moyen duquel l'inclinaison du dossier (R) rabattu vers le haut peut être réglée entre différentes positions d'utilisation.

31. Agencement de siège selon la revendication 30, **caractérisé par** un dispositif de verrouillage (5) pour verrouiller une inclinaison auparavant réglée du dossier (R).

32. Agencement de siège selon la revendication 31, **caractérisé en ce que** le dispositif de verrouillage (5) est formé par la réalisation autobloquante du dispositif de réglage (4) ou par un frein associé au dispositif de réglage (4).

33. Agencement de siège selon la revendication 31, **caractérisé en ce qu'**il est prévu un dispositif de verrouillage (5) séparé qui coopère avec le dispositif de réglage (4).

34. Agencement de siège selon la revendication 33, **caractérisé en ce que** le dispositif de verrouillage (5) comprend un élément de verrouillage primaire (51) qui agit sur le dispositif de réglage (4) pour le verrouillage de celui-ci, ainsi qu'un élément de verrouillage secondaire (52) avec lequel l'élément de verrouillage primaire (51) peut être verrouillé dans une position dans laquelle il agit sur le dispositif de réglage (4).

35. Agencement de siège selon la revendication 34, **caractérisé en ce que** le dispositif de verrouillage secondaire (52) amène l'élément de verrouillage primaire (51) hors d'engagement avec le dispositif de réglage (4) pour pouvoir modifier l'inclinaison du dossier.

36. Agencement de siège selon l'une des revendications 9 à 35, **caractérisé en ce que** la surface de siège (F) est formée par un rembourrage de siège agencé sur le châssis de siège.
